# FASCICULE DE BREVET EUROPEEN

(11) **EP 3 172 085 B1**
(45) Date de publication et mention de la délivrance du brevet: **02.05.2018**
(21) Numéro de dépôt: 15748286.0
(22) Date de dépôt: 10.07.2015
(51) Int. Cl.: B60R 11/02, B60N 3/00

(54) **TABLETTE ARRIÈRE D'UN DOSSIER DE SIÈGE AUTOMOBILE, SIÈGE ÉQUIPE D'UNE TELLE TABLETTE ET AGENCEMENT D'UN TEL SIÈGE**
HINTERES TABLETT FÜR KRAFTFAHRZEUGSITZRÜCKENLEHNE, MIT SOLCH EINEM TABLETT AUSGESTATTETER SITZ UND ANORDNUNG SOLCH EINES SITZES
REAR TRAY FOR A MOTOR VEHICLE SEAT BACKREST, SEAT EQUIPPED WITH SUCH A TRAY AND ARRANGEMENT OF SUCH A SEAT

(30) Priorité: 24.07.2014 FR 1457156
(43) Date de publication de la demande: 31.05.2017
(73) Titulaire: Renault S.A.S., 92100 Boulogne-Billancourt (FR)
(72) Inventeur: FLATRES, Fabrice, 78990 Elancourt (FR)
(86) Numéro de dépôt international: PCT/FR2015/051921
(87) Numéro de publication internationale: WO 2016/012693

(56) Documents cités:
- CN-U- 202 838 132
- DE-A1-102012 112 942
- DE-U1-202012 007 102
- FR-A1- 2 989 651
- US-A1- 2013 001 987

## Description

La présente invention concerne une tablette arrière de dossier de siège, un siège équipé d'une telle tablette, ainsi qu'un agencement d'un tel siège.

En particulier, elle concerne une tablette arrière escamotable formant support d'écran tactile, la tablette étant munie d'un réceptacle pivotant autour d'un axe transversal porté par une plaque de support montée sur le dossier, le réceptacle étant pivotant entre une position horizontale d'utilisation et une position relevée contre la plaque de support.

La tendance pour l'usage d'appareils électroniques de type tablettes ou écrans tactiles de téléphone augmente. Ces appareils étant habituellement utilisés pour consulter des sites internet, lire des livres ou bien regarder des films, les passagers des véhicules sont de plus en plus fréquemment amenés à s'en servir pour se divertir au cours de longs trajets.

Cependant, l'utilisation prolongée de ce type d'appareils peut devenir rapidement malcommode pour le passager en raison de leur poids important. En outre, l'usage de ces appareils étant relativement récent, les véhicules n'intègrent généralement pas de supports de tablettes ou d'écrans tactiles, notamment à destination des occupants des sièges arrières.

Il faut de plus que ces appareils soient non seulement correctement positionnés de façon à offrir une lecture confortable à l'utilisateur, mais aussi qu'ils soient faciles à installer. Il est en outre nécessaire qu'ils ne présentent pas de danger en cas de choc. Il est donc important que leurs moyens de support offrent un maintien optimal et que ceux-ci ne soient pas potentiellement dangereux pour les occupants du véhicule.

On connait par la demande FR-A-2989651 un dispositif de tablette multifonction dans lequel la tablette de dossier de siège - selon le préambule de la revendication 1 - comporte un réceptacle pivotant autour d'un axe transversal entre une position horizontale d'utilisation et une position relevée contre le dossier, et dans lequel la tablette forme support d'un écran tactile, un bord inférieur de l'écran étant agencé contre une paroi intérieure du réceptacle et un bord supérieur de l'écran étant maintenu au moyen d'une pince mobile entre une position relevée et une position escamotée, la pince mobile formant également un moyen de support de type porte-gobelet.
La présente invention a pour objet de proposer un dispositif alternatif de tablette multifonction formant support d'écran tactile qui soit pratique, sûr et de conception simple.
A cet effet, l'invention comprend une tablette arrière de dossier de siège automobile comportant un réceptacle pivotant autour d'un axe de rotation transversal porté par une plaque de support destinée à être fixée sur un dossier de siège, le réceptacle étant en rotation entre une position sensiblement horizontale d'utilisation et une position relevée contre la plaque de support, une paroi intérieure du réceptacle étant destinée à recevoir un bord inférieur d'un écran tactile caractérisée en ce que la tablette comporte des moyens de retenue élastiques aptes à maintenir une partie supérieure de l'écran tactile, les moyens de retenue élastiques étant constitués par un élément de jointure reliant deux fils élastiques portés par la plaque de support. Avantageusement, les fils élastiques associés par l'élément de jointure permettent le maintien en position de l'écran tactile sur la tablette arrière.
Ce positionnement de l'écran tactile sur la tablette arrière permet à l'utilisateur de visualiser l'écran de façon confortable, depuis le siège arrière du véhicule automobile.

Dans des formes de réalisation préférées de l'invention, on a en outre recours à l'une et/ou à l'autre des dispositions suivantes prises seules ou en combinaison:
- Les fils élastiques sont parallèles et présentent la direction de l'axe de rotation transversal.
- L'élément de jointure est réalisé par une bande mobile en déplacement le long des fils.
- L'élément de jointure entoure chaque fil et est relié sur un espace central de recouvrement.
- L'élément de jointure est réalisé en matériau élastique.
- La plaque support comprend deux extrémités latérales opposées encadrant une face centrale contre laquelle sont disposés les fils élastiques, les fils élastiques étant fixés sur les extrémités latérales opposées de la plaque support.
- Les fils sont situés dans un plan parallèle au plan comprenant la face centrale de la plaque support.
- La paroi intérieure du réceptacle comprend une série de rainures parallèles aux fils élastiques, chaque rainure assurant une position de l'écran tactile sur la tablette.

Ensuite, l'invention concerne aussi un siège de véhicule automobile muni d'une tablette arrière selon l'une quelconque des caractéristiques ci-dessus, ainsi qu'un agencement de siège automobile comprenant un siège de véhicule selon les caractéristiques précédentes et un écran tactile présentant un bord supérieur et un bord inférieur, l'écran tactile étant destiné à être positionné sur la tablette du siège en position d'utilisation, le bord supérieur de l'écran tactile étant en contact avec l'élément de jointure en position d'utilisation de la tablette de siège, un premier fil élastique recouvrant en partie l'écran à l'avant et le second fil élastique étant positionné à l'arrière de l'écran tactile.

D'autres caractéristiques et avantages de l'invention apparaîtront au cours de la description suivante de plusieurs de ses formes de réalisation, données à titre d'exemples non limitatifs, en regard des dessins joints. Sur les dessins :
La figure 1 est une vue arrière en perspective de l'arrière d'un dossier de siège automobile avec une tablette arrière en position rabattue.
La figure 2 est une vue arrière en perspective de l'arrière d'un dossier de siège automobile avec une tablette arrière en position d'utilisation.
La figure 3 est une vue arrière en perspective d'un arrière de dossier de siège avec une tablette en position d'utilisation sur laquelle est disposé un écran tactile, avec une longueur en contact avec le réceptacle.
La figure 4 est une vue arrière en perspective d'un arrière de dossier de siège avec une tablette en position d'utilisation sur laquelle est disposé un écran tactile avec une largeur en contact avec le réceptacle.

Dans le contexte de la présente demande, les termes « avant », « arrière », « gauche », « droite », « inférieur », « supérieur », s'entendent en référence à un repère usuel des véhicules automobiles comprenant un premier axe longitudinal X, horizontal et orienté de l'arrière vers l'avant, c'est-à-dire du coffre vers le capot, un axe transversal Y et un axe vertical Z dirigé du bas vers le haut, c'est-à-dire du plancher vers le toit du véhicule, avec un siège disposé dans le véhicule, le dossier du siège étant en position d'utilisation face à la route.

Par ailleurs, sur les différentes figures, les mêmes références désignent des éléments identiques ou similaires.

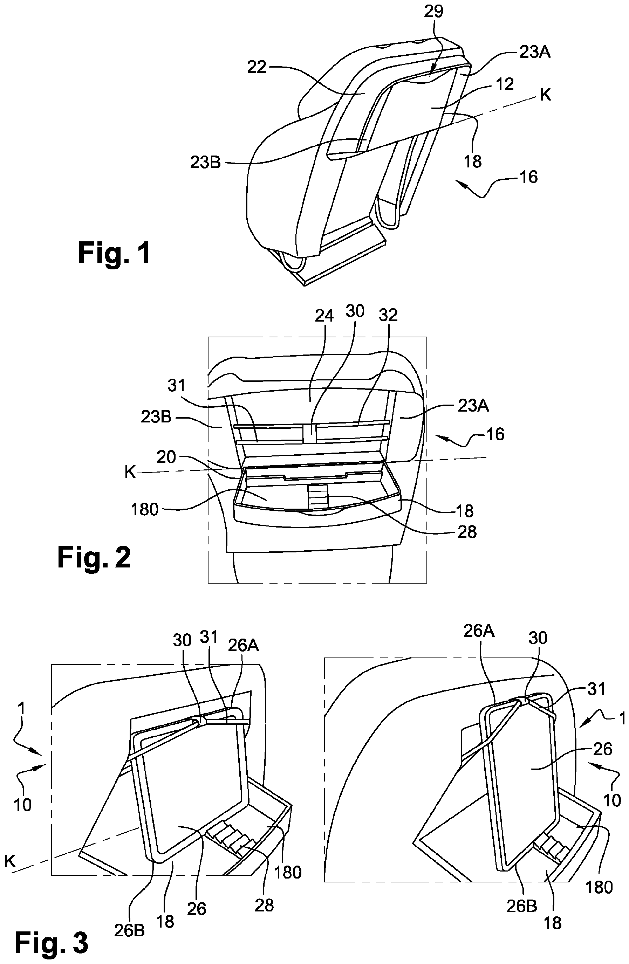

La figure 1 est une vue en perspective d'un arrière de siège avec une tablette arrière 16 en position rabattue. La tablette arrière 16 est fixée sur l'arrière du dossier du siège automobile. Elle comprend une plaque support 22 solidaire du dossier, la plaque de support 22 comprenant deux extrémités latérales 23A et 23B et une partie centrale 29 encadrée par les deux extrémités latérales, la partie centrale 29 comprend le réceptacle 18 pivotant autour d'un axe de rotation K situé en partie basse de la plaque de support 22. L'axe de rotation K est sensiblement transversal. Le réceptacle 18 est pivotant entre une position rabattue contre une face centrale de la plaque support 22 comme représenté en figure 1 et une position d'utilisation où celui-ci est disposé sensiblement horizontalement. La position d'utilisation est divulguée en figure 2. Le réceptacle 18 comprend une paroi intérieure destinée à recevoir un bord inférieur de l'écran tactile.

Des fils élastiques de maintien 31 sont disposés le long de la face centrale 24 de la plaque de support 22, comme visible sur la figure 2, ces fils 31 sont destinés à maintenir en position un élément sur la tablette, ici un écran tactile. Sur la figure 2, ces fils sont en position de repos. Les fils ne sont pas visibles lorsque la tablette 16 est en position relevée contre la plaque de support.

Les fils 31 sont situés dans un plan parallèle au plan comprenant la face centrale 24 de la plaque support, comme sur la figure 1.

Dans le mode de réalisation décrit, les fils élastiques sont sensiblement parallèles et sont orientés suivant l'axe de rotation K du réceptacle, c'est-à-dire suivant l'horizontale et suivant la direction transversale dans le véhicule.

Les fils 31 sont liés par un élément de jointure 30. L'élément de jointure 30 et les fils élastiques de maintien constituent les moyens de retenue élastiques 20. Ils permettent avantageusement le maintien en position d'un écran tactile sur la tablette.

L'élément de jointure 30 est constitué d'une bande, et présente une largeur de 1 à 5 cm environ. Avantageusement cette bande possède des propriétés élastiques, permettant ainsi une extension supplémentaire favorisant le coincement de l'écran tactile. Elle est de préférence, réalisée en matériau élastique et est située sensiblement de façon centrale sur les fils 31, c'est-à-dire qu'elle est située environ à égale distance de chaque extrémité des fils.

Cette bande est mobile en déplacement le long des fils élastiques. Elle permet ainsi une fixation de l'écran sur toute la longueur du fil 31. L'élément de jointure 30 entoure chaque fil 31 par une portion sensiblement tubulaire, et est relié sur un espace central de recouvrement 32. Cet espace central de recouvrement 32, situé entre les fils 31, est en contact direct avec le bord supérieur de l'écran tactile.

L'écran tactile, lorsque disposé sur la tablette, a son bord inférieur en contact avec la paroi intérieure 180 du réceptacle. Cette paroi comporte une série 280 de rainures 28 parallèles aux fils élastiques, chaque rainure 28 assurant une position de l'écran tactile sur la tablette. Les rainures 28 parallèles aux fils élastiques permettent avantageusement à la tablette d'avoir un bord supérieur disposé horizontalement. Les rainures 28 de la paroi intérieure du réceptacle sont de préférence disposées de façon centrale sur le réceptacle, c'est-à-dire à égale distance des bords latéraux. Des positionnements alternatifs peuvent être aussi légalement envisagés. Les rainures 28 permettent une tenue en position parfaite du bord inférieur par rapport à la paroi intérieure du réceptacle, elles empêchent tout phénomène de glissement vers l'avant ou vers l'arrière du bord inférieur de l'écran tactile, l'effet de la pression exercée par l'élément de jointure sur le bord supérieur de l'écran tactile, de façon à le maintenir, est ainsi maximalisé.

Le fil inférieur est situé à une distance d'environ 5 à 20 cm de l'axe de rotation K, et l'écartement entre les fils est d'environ 5 à 12 cm.

Le mode de fixation permet avantageusement des modes d'utilisation en visualisation selon plusieurs formats, dépendant de la dimension de l'écran tactile, adapté ainsi à une utilisation pour un écran tactile de petit format tel un téléphone ou un écran tactile grand format. Pour un téléphone, plus petit, une disposition de type portrait, c'est-à-dire une largeur orientée transversalement sera préférée, tandis que pour un écran tactile grand format, une disposition de type paysage avec une longueur orientée transversalement pourra être favorisée.

La figure 3 divulgue l'écran tactile 26 en position sur le réceptacle 18, les bords supérieur 26A et inférieur 26B étant constitués par les longueurs. L'écran est ainsi placé en format paysage. Le bord inférieur de l'écran est placé dans l'une des fentes 28 de la partie intérieure 180 du réceptacle 18, et le bord supérieur de l'écran est retenu grâce à l'élément de jointure 30. L'élément de jointure 30 permet de maintenir l'écran tactile 26 en pression vers le bas, en exerçant un effort de haut en bas, avec une composante en majorité ainsi sensiblement verticale.

La figure 4 montre l'écran tactile 26 dans une position plus en avant qu'en figure 3 du fait de la plus grande longueur disposée suivant la verticale. Ainsi, en position d'utilisation de la tablette de siège, le bord supérieur de l'écran tactile 26A est en contact avec l'élément de jointure 30, un premier fil élastique 31 recouvrant en partie l'écran à l'avant et le second fil élastique 31 étant positionné à l'arrière de l'écran tactile 26.

L'écran tactile représenté est sensiblement rectangulaire et présente donc deux bords opposés parallèles deux à deux. Ils présentent ainsi un bord supérieur 26A et un bord inférieur 26B.

Le maintien en position de l'écran tactile sur la tablette est réalisé de la manière suivante : la tablette est tout d'abord placée en position d'utilisation par préhension du réceptacle 18 au moyen d'un élément de préhension supérieur, placé au sommet de la face extérieure du réceptacle 18. La pression sur l'élément de préhension provoque le pivotement vers le bas du réceptacle 18 autour de l'axe K. L'écran tactile 26 est ensuite inséré dans l'une des fentes 28 du réceptacle 18, le bord supérieur 26A de l'écran étant placé au contact de l'élément de jointure 30, puis en appui sur celui-ci, le bord supérieur de l'écran est placé à l'arrière du fil supérieur. L'écran tactile 26 est ainsi placé entre le fil supérieur 31 qui se localise à l'avant et le fil inférieur 31 qui se localise à l'arrière, au contact de l'élément de jointure. Les deux fils 31 prennent une élongation du fait de l'élasticité de ceux-ci. L'utilisation d'un fil d'un diamètre faible permet d'amoindrir et de prévenir une éventuelle gêne pour l'utilisateur. Le fil placé en avant de l'écran ne gêne ainsi pas la visibilité pour l'utilisateur. L'écran 26 est ainsi bien maintenu entre les quatre bras des deux fils 31, deux disposés à l'avant de l'écran et deux disposés à l'arrière de l'écran et grâce à l'élément de jointure 30.

Lorsque l'utilisateur souhaite retirer l'écran tactile, il lui suffit d'exercer une légère pression vers le haut afin de dégager le bord inférieur, puis basculer l'écran autour de l'élément de jointure et retirer l'écran.

L'invention concerne aussi un agencement 10 de siège automobile comprenant un siège de véhicule muni d'une tablette arrière telle que définie ci-dessus et un écran tactile 26 destiné à être positionné sur la tablette du siège en position d'utilisation.

La tablette selon l'invention présente l'avantage de proposer des moyens de maintien qui sont utilisables avec plusieurs formats d'écrans tactiles. Ils permettent de plus, plusieurs réglages d'inclinaisons possibles. L'invention apporte une solution simple et efficace au problème du maintien des écrans tactiles dans les véhicules automobiles, et permet ainsi leur utilisation par les occupants des sièges arrière.

## Revendications

1. Tablette arrière (16) de dossier de siège automobile comportant un réceptacle (18) pivotant autour d'un axe de rotation transversal (K) porté par une plaque de support (22) destinée à être fixée sur un dossier de siège, le réceptacle (18) étant en rotation entre une position sensiblement horizontale d'utilisation et une position relevée contre la plaque de support (22), une paroi intérieure (180) du réceptacle (18) étant destinée à recevoir un bord inférieur d'un écran tactile **caractérisée en ce que** la tablette (16) comporte des moyens de retenue élastiques (20) aptes à maintenir une partie supérieure de l'écran tactile (26), les moyens de retenue élastiques (20) étant constitués par un élément de jointure (30) reliant deux fils élastiques (31) portés par la plaque de support (22).

2. Tablette arrière (16) de dossier de siège selon la revendication précédente, **caractérisée en ce que** les fils élastiques (31) sont parallèles et présentent la direction de l'axe de rotation transversal (K).

3. Tablette arrière (16) de dossier de siège selon la revendication précédente, **caractérisée en ce que** l'élément de jointure (30) est réalisé par une bande mobile en déplacement le long des fils.

4. Tablette arrière (16) de dossier de siège selon la revendication précédente, **caractérisée en ce que** l'élément de jointure (30) entoure chaque fil (31) et est relié sur un espace central de recouvrement (32).

5. Tablette arrière (16) de dossier de siège selon la revendication précédente, **caractérisée en ce que** l'élément de jointure (30) est réalisé en matériau élastique.

6. Tablette arrière (16) de dossier de siège selon l'une quelconque des revendications précédentes, **caractérisée en ce que** la plaque support comprend deux extrémités latérales opposées (23A, 23B) encadrant une face centrale (24) contre laquelle sont disposés les fils élastiques (31), les fils élastiques (31) étant fixés sur les extrémités latérales opposées (23A, 23B) de la plaque support (22).

7. Tablette arrière (16) de dossier de siège selon la revendication précédente, **caractérisée en ce que** les fils (31) sont situés dans un plan parallèle au plan comprenant la face centrale (24) de la plaque support.

8. Tablette arrière (16) de dossier de siège selon l'une quelconque des revendications précédentes, **caractérisée en ce que** la paroi intérieure (180) du réceptacle comprend une série (28) de rainures parallèles aux fils élastiques, chaque rainure assurant une position de l'écran tactile sur la tablette.

9. Siège de véhicule (1) automobile muni d'une tablette arrière (12) selon l'une quelconque des revendications précédentes.

10. Agencement (10) de siège automobile comprenant un siège de véhicule selon la revendication précédente et un écran tactile (26) présentant un bord supérieur (26A) et un bord inférieur (26B), l'écran tactile (26) étant destiné à être positionné sur la tablette du siège (16) en position d'utilisation **caractérisé en ce que**, en position d'utilisation de la tablette de siège, le bord supérieur de l'écran tactile (26A) est en contact avec l'élément de jointure (30), un premier fil élastique (31) recouvrant en partie l'écran à l'avant et le second fil élastique (31) étant positionné à l'arrière de l'écran tactile (26).

## Patentansprüche

1. Hintere Ablageplatte (16) einer Rückenlehne eines Kraftfahrzeugsitzes, umfassend einen Behälter (18), welcher sich um eine Quer-Drehachse (K) dreht, die von einer Trägerplatte (22) getragen wird, welche dafür vorgesehen ist, an der Sitzrückenlehne befestigt zu werden, wobei der Behälter (18) zwischen einer im wesentlichen horizontalen Gebrauchsposition und einer gegen die Trägerplatte (22) hochgeklappten Position in Drehung ist, wobei eine innere Wand (180) des Behälters (18) dafür vorgesehen ist, einen unteren Rand eines Berührungsbildschirms aufzunehmen, **dadurch gekennzeichnet, dass** die Ablageplatte (16) elastische Haltemittel (20) umfasst, welche dafür geeignet sind, um einen oberen Abschnitt des Berührungsbildschirms (26) zu halten, wobei die elastischen Haltemittel (20) von einem Verbindungselement (30) gebildet werden, welches zwei elastische, von der Trägerplatte (22) getragene Schnüre (31) verbindet.

2. Hintere Ablageplatte (16) einer Sitzrückenlehne nach dem vorhergehenden Anspruch, **dadurch gekennzeichnet, dass** die elastischen Schnüre (31) parallel verlaufen und die Richtung der Quer-Drehachse (K) aufweisen.

3. Hintere Ablageplatte (16) einer Sitzrückenlehne nach dem vorhergehenden Anspruch, **dadurch gekennzeichnet, dass** das Verbindungselement (30) von einem entlang der Schnüre verschiebbar beweglichen Band ausgeführt ist.

4. Hintere Ablageplatte (16) einer Sitzrückenlehne nach dem vorhergehenden Anspruch, **dadurch gekennzeichnet, dass** das Verbindungselement (30) jede Schnur (31) umgibt und über einem zentralen Abdeckungsraum (32) verbunden ist.

5. Hintere Ablageplatte (16) einer Sitzrückenlehne nach dem vorhergehenden Anspruch, **dadurch gekennzeichnet, dass** das Verbindungselement (30) aus elastischem Material ausgeführt ist.

6. Hintere Ablageplatte (16) einer Sitzrückenlehne nach einem der vorhergehenden Ansprüche, **dadurch gekennzeichnet, dass** die Trägerplatte zwei seitliche, gegenüberliegende Enden (23A, 23B) aufweist, welche eine zentrale Fläche (24) einrahmen, an welcher die elastischen Schnüre (31) angelegt sind, wobei die elastischen Schnüre (31) an den seitlichen, gegenüberliegenden Enden (23A, 23B) der Trägerplatte (22) befestigt sind.

7. Hintere Ablageplatte (16) einer Sitzrückenlehne nach dem vorhergehenden Anspruch, **dadurch gekennzeichnet, dass** sich die Schnüre (31) in einer Ebene parallel zu der die zentrale Fläche (24) der Trägerplatte enthaltenden Ebene befinden.

8. Hintere Ablageplatte (16) einer Sitzrückenlehne nach einem der vorhergehenden Ansprüche, **dadurch gekennzeichnet, dass** die innere Wand (180) des Behälters eine Reihe (28) von zu den elastischen Schnüren parallele Rillen aufweist, wobei jede Rille eine Position des Berührungsbildschirms auf der Ablageplatte gewährleistet.

9. Kraftfahrzeugsitz (1), welcher mit einer hinteren Ablageplatte (12) nach einem der vorhergehenden Ansprüche versehen ist.

10. Anordnung (10) eines Fahrzeugsitzes, aufweisend einen Fahrzeugsitz nach dem vorhergehenden Anspruch und einen Berührungsbildschirm (26), welcher einen oberen Rand (26A) und einen unteren Rand (26B) aufweist, wobei der Berührungsbildschirm (26) dafür vorgesehen ist, auf der Ablageplatte des Sitzes (16) in Gebrauchsposition positioniert zu werden, **dadurch gekennzeichnet, dass** in Gebrauchsposition der Sitzablageplatte der obere Rand des Berührungsbildschirms (26A) in Kontakt mit dem Verbindungselement (30) ist, wobei eine erste elastische Schnur (31) teilweise den Bildschirm vorne überdeckt und wobei die zweite elastische Schnur (31) hinter dem Berührungsbildschirm (26) positioniert ist.

## Claims

1. Rear tray (16) for a motor vehicle seat backrest, comprising a receptacle (18) which pivots about a transverse rotation axis (K) passing through a support plate (22) intended to be fixed to a seat backrest, the receptacle (18) being able to rotate between a substantially horizontal usage position and a position raised up against the support plate (22), an inner wall (180) of the receptacle (18) being intended to receive a lower edge of a touchscreen, **characterized in that** the tray (16) comprises elastic retention means (20) able to hold an upper part of the touchscreen (26), the elastic retention means (20) being formed by a joining element (30) connecting two elastic threads (31) carried by the support plate (22).

2. Rear tray (16) for a seat backrest according to the preceding claim, **characterized in that** the elastic threads (31) are parallel and have the direction of the transverse rotation axis (K).

3. Rear tray (16) for a seat backrest according to the preceding claim, **characterized in that** the joining element (30) is made of a strap which is movable in displacement along the threads.

4. Rear tray (16) for a seat backrest according to the preceding claim, **characterized in that** the joining element (30) surrounds each thread (31) and is connected to a central covering space (32).

5. Rear tray (16) for a seat backrest according to the preceding claim, **characterized in that** the joining element (30) is made of elastic material.

6. Rear tray (16) for a seat backrest according to any of the preceding claims, **characterized in that** the support plate comprises two opposite lateral ends (23A, 23B) framing a central face (24) against which the elastic threads (31) are arranged, the elastic threads (31) being fixed to the opposite lateral ends (23A, 23B) of the support plate (22).

7. Rear tray (16) for a seat backrest according to the preceding claim, **characterized in that** the threads (31) are situated in a plane parallel to the plane comprising the central face (24) of the support plate.

8. Rear tray (16) for a seat backrest according to any of the preceding claims, **characterized in that** the inner wall (180) of the receptacle comprises a series (28) of grooves parallel to the elastic threads, each groove ensuring a position of the touchscreen on the tray.

9. Motor vehicle seat (1) equipped with a rear tray (12) according to any of the preceding claims.

10. Arrangement (10) of a motor vehicle seat comprising a vehicle seat according to the preceding claim, and a touchscreen (26) with an upper edge (26A) and a lower edge (26B), the touchscreen (26) being intended to be positioned on the seat tray (16) in the usage position, **characterized in that**, when the seat tray is in the usage position, the upper edge of the touchscreen (26A) is in contact with the joining element (30), a first elastic thread (31) partly covering the screen at the front and the second elastic thread (31) being positioned behind the touchscreen (26).
